(19) Europäisches Patentamt
European Patent Office
Office européen des brevets

(11) Veröffentlichungsnummer: **0 064 952**
**B1**

# (12) EUROPÄISCHE PATENTSCHRIFT

(45) Veröffentlichungstag der Patentschrift: **24.07.85**

(51) Int. Cl.⁴: **C 09 B 29/036,** C 09 B 29/20, C 09 B 29/33

(21) Anmeldenummer: **82810192.3**

(22) Anmeldetag: **06.05.82**

## (54) Neue Monoazopigmente.

(30) Priorität: **12.05.81 CH 3065/81**

(43) Veröffentlichungstag der Anmeldung: **17.11.82 Patentblatt 82/46**

(45) Bekanntmachung des Hinweises auf die Patenterteilung: **24.07.85 Patentblatt 85/30**

(84) Benannte Vertragsstaaten: **CH DE FR GB IT LI**

(56) Entgegenhaltungen:
**FR - A - 2 116 492**
**FR - A - 2 370 082**
**JP - A - 18 071 766**
**JP - A - 21 009 166**

**Die Akte enthält technische Angaben, die nach dem Eingang der Anmeldung eingereicht wurden und die nicht in dieser Patentschrift enthalten sind.**

(73) Patentinhaber: **CIBA-GEIGY AG, Postfach, CH-4002 Basel (CH)**

(72) Erfinder: **Cseh, Georg, Dr., Quellenweg 12, CH-4144 Arlesheim (CH)**
Erfinder: **Hari, Stefan, Dr., Feldstrasse 49, CH-4123 Allschwil (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

**Beschreibung**

Die vorliegende Erfindung betrifft neue Phthalimidazopigmente, deren Herstellung, deren Verwendung zum Färben von organischen Materialien, sowie das gefärbte Material.

In der JP-OS 2191/66 und in der JP-OS 18717/66 sind Azopigmente beschrieben, die durch Kuppeln von diazotierten Aminophthalimiden mit Acetoacetylaniliden bzw. 2-Hydroxy-3-naphthoesäureaniliden erhalten werden. Aus der CH-PS 611 642 (FR-A-2370082) sind Azopigmente bekannt, die durch Kuppeln von diazotierten Aminobenzimidazolonen mit Acetoacetylaminoacetaniliden erhalten werden. Es wurde nun gefunden, dass man Pigmente mit verbesserten Eigenschaften erhält, wenn man diazotierte Aminophthalimide mit geeignet substituierten Acetoacetylaniliden kuppelt.

Die Erfindung betrifft somit neue Monoazopigmente der Formel I

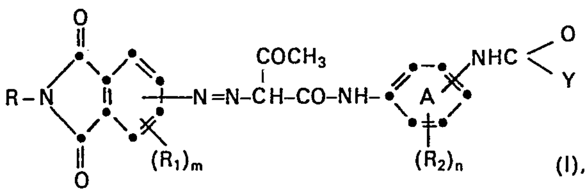
(I),

worin R Wasserstoff oder Methyl bedeutet, $R_1$ und $R_2$ Wasserstoff, Chlor, Methyl oder Methoxy bedeuten, und Y Methyl, Phenyl oder in ortho-Stellung zur NHCO-Gruppe am Ring A zum Heterocyclus gebundenes –O–, –S–, $-N(R_3)-$ oder $-C(R_4)=CH-$ bedeutet, worin $R_3$ und $R_4$ Wasserstoff oder Methyl bedeuten, und m und n unabhängig voneinander 1 oder 2 bedeuten.

Die bevorzugte Bedeutung von n und m ist 1.

Von besonderem Interesse sind Verbindungen der Formel I, worin R und $R_1$ Wasserstoff bedeuten, $R_2$ Wasserstoff, Chlor, Methyl oder Methoxy bedeutet, und Y Methyl, Phenyl oder in ortho-Stellung zur –NHCO-Gruppe am Ring A zum Heterocyclus gebundenes –O–, –S–, $-C(CH_3)=CH-$ oder –NH– bedeutet.

Besonders bevorzugte Verbindungen entsprechen der Formel I, worin R und $R_1$ Wasserstoff sind, $R_2$ Wasserstoff, Chlor oder Methyl bedeutet, und Y Methyl, Phenyl oder in ortho-Stellung zur NHCO-Gruppe am Ring A zum Heterocyclus gebundenes –S– oder –NH– bedeutet.

In besonders bevorzugten Verbindungen der Formel I bedeutet Y in ortho-Stellung zur NHCO-Gruppe am Ring A zum Heterocyclus gebundenes –S– oder –NH–.

Von besonderem Interesse ist die Verbindung der Formel

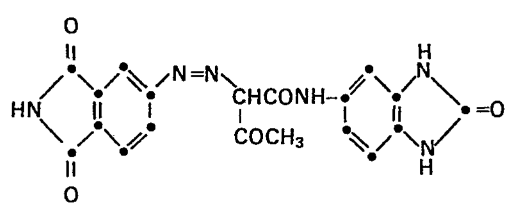

Die Herstellung der Verbindungen der Formel I erfolgt nach bekannten Methoden, z.B. durch Kuppeln eines Diazoniumsalzes eines Amins der Formel IV

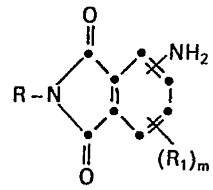
(IV),

worin R, $R_1$ und m die oben angegebene Bedeutung haben, mit einer Verbindung der Formel V

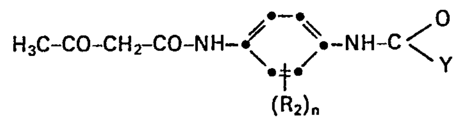
(V),

worin $R_2$, n und Y die oben angegebene Bedeutung haben.

Die Verbindungen der Formeln IV und V sind bekannt und können nach bekannten Methoden hergestellt werden.

Beispiele von Verbindungen der Formel IV sind:

3-Aminophthalimid
4-Aminophthalimid
4-Amino-5-methyl-phthalimid
4-Amino-5-chloro-phthalimid
4-Amino-5-methoxy-phthalimid.

Beispiele von Kupplungskomponenten gemäss Formel V sind:

4-Acetoacetylamino-acetanilid
4-Acetoacetylamino-benzanilid
4-Acetoacetylamino-p-chlorbenzanilid
6-Acetoacetylamino-benzimidazolon
6-Acetoacetylamino-5-chlor-benzimidazolon
6-Acetoacetylamino-5-methyl-benzimidazolon
6-Acetoacetylamino-4-methyl-7-chlorchinolon.

Die Diazotierung erfolgt nach bekannten Methoden.

Die Kupplung findet vorzugsweise in schwach saurem Medium statt, zweckmässig in Gegenwart gebräuchlicher, die Kupplung fördernder Mittel. Als solche seien insbesondere Dispergiermittel genannt, beispielsweise Aralkylsulfonate, wie Dodecylbenzolsulfonat oder 1,1'-Dinaphthylmethan-2,2'-disulfonsäure oder Polykondensationsprodukte von Äthylen- oder Propylenoxiden. Die Dispersion der Kupplungskomponente kann auch vorteilhaft Schutzkolloide, beispielsweise Methylcellulose oder kleinere Mengen inerter, in Wasser schwer löslicher oder unlöslicher organischer Lösungsmittel enthalten, beispielsweise gegebenenfalls halogenierte oder nitrierte aromatische Kohlenwasserstoffe, wie Benzol, Toluol, Xylol, Chlorbenzol, Dichlorbenzol oder Nitrobenzol, sowie aliphatische Halogenkohlenwasserstoffe, wie z.B. Tetrachlorkohlenstoff oder Trichloräthylen, ferner mit Wasser mischbare organische Lösungsmittel, wie Aceton, Methyläthylketon, Methanol,

Äthanol oder Isopropanol oder vorzugsweise Dimethylformamid.

Man kann die Kupplung auch vorteilhaft in der Weise durchführen, dass man eine saure Lösung des Diazoniumsalzes mit einer alkalischen Lösung der Kupplungskomponente in einer Mischdüse kontinuierlich vereinigt, wobei eine sofortige Kupplung der Komponenten erfolgt. Es ist darauf zu achten, dass Diazokomponente und Kupplungskomponente in äquimolekularen Mengen in der Mischdüse vorhanden sind. Dabei hat es sich als vorteilhaft erwiesen, die Diazokomponente in einem geringen Überschuss einzusetzen. Dies wird am einfachsten dadurch bewirkt, dass man den pH-Wert der Flüssigkeit in der Mischdüse kontrolliert. Auch ist in der Mischdüse für eine starke Durchwirbelung der beiden Lösungen zu sorgen. Die entstandene Pigmentdispersion wird der Mischdüse laufend entzogen und das Pigment durch Filtration abgetrennt.

Schliesslich kann die Kupplung auch so vollzogen werden, dass man das Amin mit der Kupplungskomponente im Molverhältnis 1:1 in einem organischen Lösungsmittel suspendiert und mit einem diazotierenden Mittel, insbesondere einem Ester der salpetrigen Säure, wie Methyl-, Äthyl-, Butyl-, Amyl- oder Octylnitrit, behandelt.

Die Pigmente können durch Abfiltrieren aus dem Reaktionsgemisch isoliert werden. Es erwiest sich als vorteilhaft, die isolierten Pigmente in Wasser oder in einem vorzugsweise über 80 °C siedenden organischen Lösungsmittel nachzubehandeln, gegebenenfalls unter Druck. Besonders geeignete organische Lösungsmittel sind durch Halogenatome, Alkyl- oder Nitrogruppen substituierte Benzole, wie Toluol, Xylol, Chlorbenzol, o-Dichlorbenzol oder Nitrobenzol sowie Pyridinbasen, wie Pyridin, Picolin oder Chinolin, ferner Ketone, wie Cyclohexanon, Äther, wie Äthylenglykolmonomethyl- oder -monoäthyläther, Amide, wie Dimethylformamid oder N-Methyl-pyrrolidon, Sulfolan oder Dimethylsulfoxyd. Man kann die Nachbehandlung auch in Wasser in Gegenwart von organischen Lösungsmitteln und/oder mit Zusatz von oberflächenaktiven Substanzen durchführen.

Die Nachbehandlung erfolgt vorzugsweise durch Erhitzen des Pigmentes in Wasser oder einem organischen Lösungsmittel auf 100 bis 160 °C, gegebenenfalls unter Druck. In vielen Fällen tritt eine Kornvergröberung auf, was sich günstig auf die Deckkraft, Licht- und Migrationsechtheit der erhaltenen Pigmente auswirkt.

Die neuen Pigmente eignen sich zum Pigmentieren von hochmolekularen organischen Materialien, z.B. von Celluloseäthern und -estern, linearen Polyamiden bzw. linearen Polyurethanen oder Polyestern, Acetylcellulose, Nitrocellulose, natürlichen Harzen oder Kunstharzen, wie Polymerisationsharzen oder Kondensationsharzen, z.B. Aminoplasten, insbesondere Harnstoff- und Melamin-Formaldehydharzen, Alkydharzen, Phenoplasten, Polycarbonaten, Polyolefinen, wie Polyäthylen oder Polypropylen, Polystyrol, Polyvinylchlorid, Polyacrylnitril, Polyacrylsäureester, Gummi, Casein, Silikon und Silikonharzen. Es können nicht nur die einheitlichen Verbindungen, sondern auch Gemische davon pigmentiert werden.

Dabei spielt es keine Rolle, ob die erwähnten hochmolekularen Verbindungen als plastische Massen, Schmelzen oder in Form von Spinnlösungen, Lacken, Anstrichstoffen oder Druckfarben vorliegen. Je nach Verwendungszweck erweist es sich als vorteilhaft, die neuen Pigmente als Toner oder in Form von Präparaten zu verwenden.

Die Präparate können neben dem Reinpigment beispielsweise Naturharze, wie Abietinsäure oder deren Ester, Äthylcellulose, Celluloseacetobutyrat, Erdalkalisalze höherer Fettsäuren, Fettamine, beispielsweise Stearylamin oder Rosinamin, Vinylchlorid-Vinylacetat-Copolymerisate, Polyacrylnitril oder Polyterpenharze oder wasserlösliche Farbstoffe, beispielsweise Farbstoffsulfonsäuren oder deren Erdalkalisalze enthalten.

Die erfindungsgemässen Pigmente zeichnen sich durch hohe Farbstärke, eine gute Licht-, Migrations-, Wetterechtheit und Hitzebeständigkeit und durch gute Fliesseigenschaften aus.

Die nachfolgenden Beispiele erläutern die Erfindung.

Beispiel 1

1,62 g 4-Amino-phthalimid werden in 60 ml Eisessig auf 100 °C erwärmt und anschliessend mit 5 ml 37 gew.-%iger wässeriger Salzsäure verrührt. Man kühlt auf 5 °C ab und versetzt die Suspension tropfenweise innert 8 Minuten mit 2,5 ml wässeriger 4N-Natriumnitritlösung. Die erhaltene Diazolösung wird klarfiltriert. 2,34 g 4-Acetoacetylamino-acetanilid werden in 4 ml 30 gew.-%iger wässeriger Natronlauge, 50 ml Wasser und 100 ml Alkohol bei 42 °C gelöst. Die Lösung wird filtriert, auf 8 °C abgekühlt und bei dieser Temperatur tropfenweise innert 10 Minuten mit der oben hergestellten Diazolösung versetzt. Mit 30 ml 30 gew.-%iger wässeriger Natriumhydroxidlösung wird der pH-Wert der gelben Suspension auf 5 eingestellt. Man rührt die Suspension zuerst während 4 Stunden, bis die Temperatur auf 20 °C angestiegen ist. Dann wird die Suspension innert 1 Stunde auf 75 °C erwärmt und bei dieser Temperatur abfiltriert. Der Filterrückstand wird mit warmem Wasser salzfrei gewaschen und anschliessend im Vakuum bei 60 °C getrocknet. Man erhält 3,8 g (94% der Theorie bezogen auf 4-Amino-phthalimid) eines gelben Pigmentes der Formel

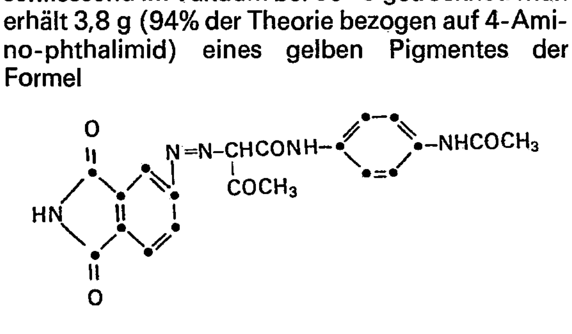

Das während 10 Stunden bei 120 °C in Äthylenglykol-äthyläther nachbehandelte Pigment erzeugt in Polyvinylchlorid echte, farbstarke und brillante grüngelbe Färbungen.

Analyse: $C_{20}H_{17}N_5O_5$

| | | | | |
|---|---|---|---|---|
| Berechnet: | C 59,0% | H 4,2% | N 17,2% | O 19,7% |
| Gefunden: | C 58,9% | H 4,2% | N 17,3% | O 19,7% |

Beispiel 2

Analog zu Beispiel 1 werden 1,62 g 4-Aminophthalimid diazotiert und mit 2,33 g 5-Acetoacetylaminobenzimidazolon gekuppelt. Nach dem Trocknen im Vakuum bei 60 °C erhält man 3,9 g (96% der Theorie bezogen auf 4-Aminophthalimid) eines gelben Pigmentes der Formel

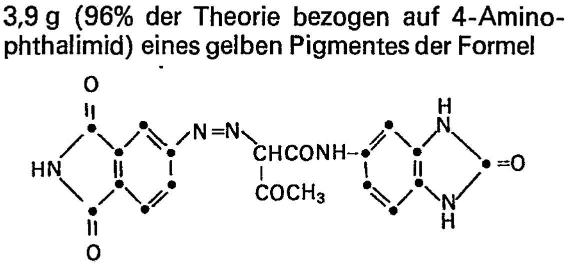

Das während 10 Stunden bei 130 °C in Dimethylformamid nachbehandelte Pigment erzeugt in Polyvinylchlorid echte, farbstarke und brillante gelbe Färbungen.

Analyse: $C_{19}H_{14}N_6O_5$

| | | | | |
|---|---|---|---|---|
| Berechnet: | C 56,2% | H 3,5% | N 20,7% | O 19,7% |
| Gefunden: | C 56,1% | H 3,4% | N 20,6% | O 20,1% |

Beispiel 3–4

Analog zu Beispiel 1 erhält man durch Diazotieren und Kuppeln der in Kolonne I aufgeführten Amine mit den Kupplungskomponenten aus Kolonne II Pigmente mit den in Kolonne III angeführten Farbtönen (0,2 Gew.-% Pigment in Polyvinylchlorid eingewalzt).

| Nr. | I<br>Amin | II<br>Kupplungskomponente | III<br>Farbton |
|---|---|---|---|
| 3 | 4-Amino-5-chlor-phthalimid | 5-Acetoacetylamino-benzimidazolon | gelb |
| 4 | 4-Amino-phthalimid | 6-Acetoacetylamino-benzthiazolon | grüngelb |

**Patentansprüche**

1. Verbindungen der Formel I

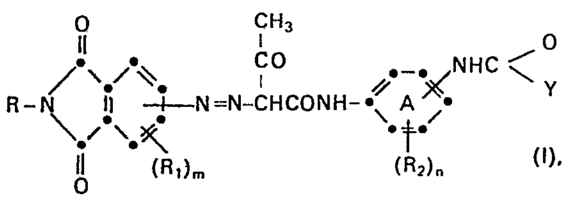

(I),

worin R Wasserstoff oder Methyl bedeutet, $R_1$ und $R_2$ Wasserstoff, Chlor, Methyl oder Methoxy bedeuten, Y Methyl, Phenyl oder in ortho-Stellung zur NHCO-Gruppe am Ring A zum Heterocyclus gebundenes –O–, –S–, $-N(R_3)-$ oder $-C(R_4)=CH-$ bedeutet, worin $R_3$ und $R_4$ Wasserstoff oder Methyl bedeuten, und m und n unabhängig voneinander 1 oder 2 bedeuten.

2. Verbindungen gemäss Anspruch 1 der Formel I, worin R und $R_1$ Wasserstoff bedeuten, $R_2$ Wasserstoff, Chlor, Methyl oder Methoxy bedeutet, Y Metyl, Phenyl oder in ortho-Stellung zur –NHCO-Gruppe am Ring A zum Heterocyclus gebundenes –O–, –S–, –NH– oder $-C(CH_3)=CH-$ bedeutet.

3. Verbindungen gemäss Anspruch 1 der Formel I, worin R und $R_1$ Wasserstoff bedeuten, $R_2$ Wasserstoff, Chlor oder Methyl bedeutet, und Y Methyl, Phenyl oder in ortho-Stellung zur –NHCO-Gruppe am Ring A zum Heterocyclus gebundenes –S– oder –NH– bedeutet.

4. Verbindungen gemäss Anspruch 1 der Formel I, worin Y in ortho-Stellung zur –NHCO-Gruppe am Ring A zum Heterocyclus gebundenes –S– oder –NH– bedeutet.

5. Verbindungen gemäss Anspruch 1 der Formel I, worin m und n 1 bedeuten.

6. Verbindung der Formel

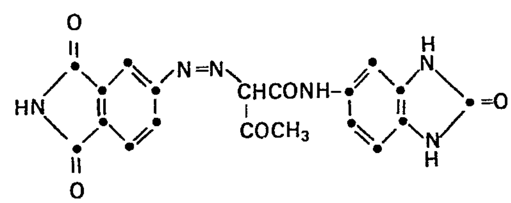

7. Verfahren zur Herstellung der Verbindungen der Formel I gemäss Anspruch 1, dadurch gekennzeichnet, dass man ein Diazoniumsalz eines Amins der Formel IV

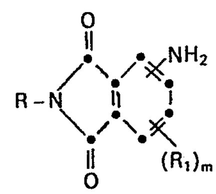

(IV),

worin R, $R_1$ und m die in Anspruch 1 angegebene Bedeutung haben, mit einer Verbindung der Formel V kuppelt

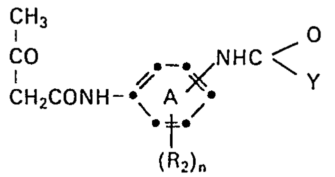

(V),

worin $R_2$, n und Y die in Anspruch 1 angegebene Bedeutung haben.

8. Pigmentiertes hochmolekulares organisches Material, enthaltend eine Verbindung der Formel I gemäss Anspruch 1.

## Revendications

1. Composés répondant à la formule I:

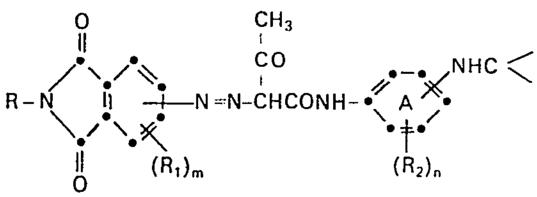

(I),

dans laquelle R représente l'hydrogène ou un méthyle, $R_1$ et $R_2$ représentent chacun l'hydrogène, le chlore, un méthyle ou un méthoxy, Y représente un méthyle, un phényle ou un radical –O–, –S–, $-N(R_3)-$ ou $-C(R_4)=CH-$ relié au noyau A en position ortho par rapport au radical –NHCO– et formant ainsi un hétérocycle, les symboles $R_3$ et $R_4$ représentent chacun l'hydrogène ou un méthyle, et m et n représentent chacun, indépendamment l'un de l'autre, le nombre 1 ou le nombre 2.

2. Composés de formule I selon la revendication 1, dans lesquels R et $R_1$ représentent chacun l'hydrogène, $R_2$ représente l'hydrogène, le chlore, un méthyle ou un méthoxy, et Y représente un méthyle, un phényle ou un radical –O–, –S–, –NH– ou $-C(CH_3)=CH-$ relié au noyau A en position ortho par rapport au radical –NHCO– et formant ainsi un hétérocycle.

3. Composés de formule I selon la revendication 1, dans lesquels R et $R_1$ représentent chacun l'hydrogène, $R_2$ représente l'hydrogène, le chlore ou un méthyle, et Y représente un méthyle, un phényle ou un radical –S– ou –NH– relié au noyau A en position ortho relativement au radical –NHCO– et formant ainsi un hétérocycle.

4. Composés de formule I selon la revendication 1, dans lesquels Y représente un radical –S– ou –NH– relié au noyau A en position ortho par rapport au radical –NHCO– et formant ainsi un hétérocycle.

5. Composés de formule I selon la revendication 1, dans lesquels m et n sont égaux chacun à 1.

6. Composé de formule

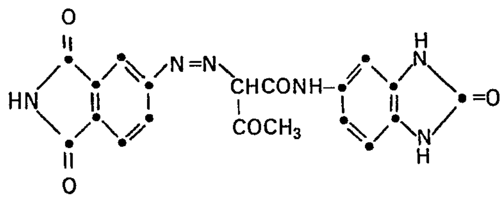

7. Procédé de préparation de composés de formule I selon la revendication 1, procédé caractérisé en ce qu'on copule un sel de diazonium d'une amine répondant à la formule IV:

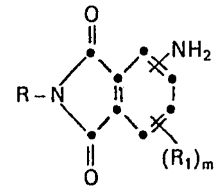

(IV),

dans laquelle R, $R_1$ et m ont les significations données à la revendication 1, avec un composé répondant à la formule V:

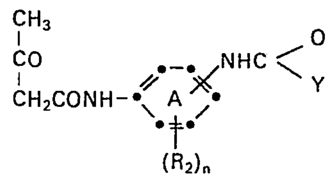

(V),

dans laquelle $R_2$, n et Y ont les significations données à la revendication 1.

8. Matières organiques macromoléculaires pigmentées, qui contiennent un composé de formule I selon la revendication 1.

## Claims

1. A compound of the formula I

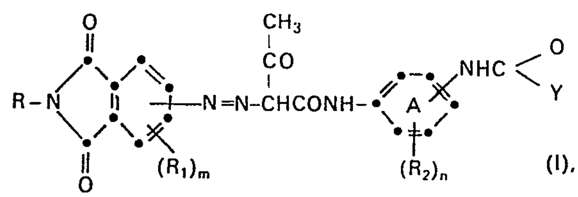

(I),

wherein R is hydrogen or methyl, $R_1$ and $R_2$ are hydrogen, chlorine, methyl or methoxy, Y is methyl or phenyl, or is –O–, –S–, $-N(R_3)-$ or $-C(R_4)=CH-$, each of which is bound at the ring A in the ortho-position with respect to the –NHCO-group to form a heterocycle, with $R_3$ and $R_4$ being hydrogen or methyl, and each of m and n independently of the other is 1 or 2.

2. A compound of the formula I according to claim 1, wherein R and $R_1$ are hydrogen, $R_2$ is hydrogen, chlorine, methyl or methoxy, and Y is methyl or phenyl, or is –O–, –S–, –NH– or $-C(CH_3)=CH-$, each of which is bound at the ring A in the ortho-position with respect to the –NHCO-group to form a heterocycle.

3. A compound of the formula I according to claim 1, wherein R and $R_1$ are hydrogen, $R_2$ is hydrogen, chlorine or methyl, and Y is methyl or phenyl, or is –S– or –NH–, each of which is bound at the ring A in the ortho-position with respect to the –NHCO-group to form a heterocycle.

4. A compound of the formula I according to claim 1, wherein Y is –S– or –NH–, each of which is bound at the ring A in the ortho-position with respect to the –NHCO-group to form a heterocycle.

5. A compound of the formula I according to claim 1, wherein m and n are each 1.

6. A compound of the formula

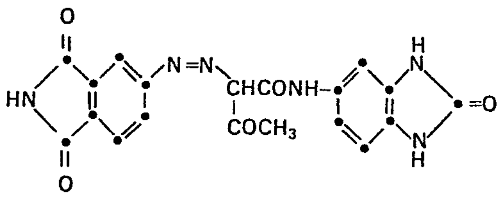

7. A process for the preparation of a compound of the formula I according to claim 1, in which process a diazonium salt of an amine of the formula IV

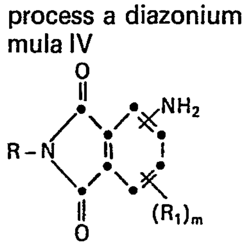

(IV),

wherein R, $R_1$ and m are as defined in claim 1, is coupled with a compound of the formula V

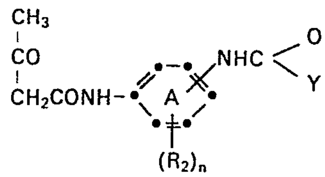

(V),

wherein $R_2$, n and Y are as defined in claim 1.

8. Pigmented, high-molecular, organic material containing a compound of the formula I according to claim 1.